# EUROPÄISCHE PATENTSCHRIFT

(11) **EP 3 239 078 B1**
(45) Veröffentlichungstag und Bekanntmachung des Hinweises auf die Patenterteilung: **15.04.2020**
(21) Anmeldenummer: 16167426.2
(22) Anmeldetag: 28.04.2016
(51) Int. Cl.: B65G 47/86

(54) **HÖHENVERSTELLVORRICHTUNG FÜR EINE GREIF- UND TRANSPORTEINRICHTUNG ZUM GREIFEN, HALTEN, FÜHREN UND TRANSPORTIEREN VON INSBESONDERE FLASCHENARTIGEN BEHÄLTERN**
DEVICE FOR REGULATING THE HEIGHT OF A GRIPPING AND TRANSPORT DEVICE FOR GRIPPING, HOLDING, GUIDING AND TRANSPORTING OBJECTS, IN PARTICULAR BOTTLE-LIKE CONTAINERS
DISPOSITIF DE REGLAGE EN HAUTEUR POUR UN DISPOSITIF DE PREHENSION ET DE TRANSPORT DESTINE A SAISIR, RETENIR, GUIDE ET TRANSPORTER DES RECIPIENTS EN FORME DE BOUTEILLE

(43) Veröffentlichungstag der Anmeldung: 01.11.2017
(73) Patentinhaber: Tyrolon-Schulnig GmbH, 6395 Hochfilzen (AT)
(72) Erfinder: Schulnig, Elmar, 6391 Fieberbrunn (AT); Schlunig, Ludwig, 6392 St. Jakob i.H. (AT)
(74) Vertreter: Meissner Bolte Partnerschaft mbB

(56) Entgegenhaltungen:
- EP-A1- 0 647 578
- EP-A1- 2 186 759
- EP-A1- 2 332 867
- EP-A1- 2 774 877
- EP-A1- 2 949 608
- CN-U- 202 138 858
- CN-U- 203 450 734
- DE-A1- 19 903 319
- JP-A- H1 159 889
- JP-A- 2008 156 054
- JP-A- 2010 168 047
- US-A- 5 165 517

## Beschreibung

Die vorliegende Erfindung betrifft eine Höhenverstellvorrichtung für eine Greif-und Transporteinrichtung zum Greifen, Halten, Führen und Transportieren von insbesondere flaschenartigen Behältern.

Eine solche Transporteinrichtung zum Greifen, Halten, Führen und/oder Transportieren von insbesondere flaschenartigen Behältern ist bereits aus dem Stand der Technik bekannt, insbesondere unter dem Namen "Klammerstern", und wird bei der fließbandtechnischen Bearbeitung und Handhabung von Behältern verwendet. Die Transporteinrichtung weist normalerweise eine Trägerplatte als Basis auf, an der oder auf der über deren Umfang verteilt einzelne Greifeinrichtungen montiert sind. In einem automatischen Reinigungs-, Abfüll- oder Etikettierprozess kommen üblicherweise mehrere solcher Transporteinrichtungen zum Einsatz.

Unter dem Begriff "Behälter" sind im Zusammenhang mit der vorliegenden Erfindung insbesondere, aber nicht ausschließlich Behälter mit einem im Wesentlichen kreisförmigen Querschnitt zu verstehen, z.B. Flaschen oder Dosen oder Gläser, die jeweils den Gepflogenheiten entsprechend aus Glas, Metall oder Kunststoff bestehen können. Unter dem Begriff "im Wesentlichen rund geformt" sind im Zusammenhang mit der vorliegenden Erfindung nicht ausschließlich im geometrischen Sinne rund geformte Behälter zu verstehen, sondern beispielsweise auch ovale, regelmäßig vieleckige, usw., welche dann insbesondere einen im Wesentlichen kreisförmigen, beispielsweise aber auch ovalen oder vieleckigen Querschnitt aufweisen.

Eine oder mehrere Transporteinrichtungen werden unter anderem in einem Prozessablauf zum Reinigen und Befüllen von Behältern verwendet, in denen die Transporteinrichtungen örtlich positioniert und justiert werden, um die Behälter von Förderbändern aufzunehmen und diese zur nächsten Station wie z.B. einer Abfüll- oder Reinigungsanlage und bspw. von dort zu einer Etikettierstation zu transportieren. Hierzu weist eine Transporteinrichtung Greifeinrichtungen zum Greifen, Halten und/oder Führen von insbesondere flaschenartigen Behältern auf, die auf einer mit einer Antriebswelle rotierbaren Trägerplatte angeordnet und befestigt sind. Eine solche Greifeinrichtung (bzw. Greifeinheit) für ein Behältertransportsystem besitzt wenigstens ein Greifarmpaar mit zwei Greifarmen und kann zwischen einer Greifstellung und einer Öffnungsstellung wechseln. Um einen Behälter zu transportieren, greifen die Greifarme normalerweise unterhalb des Halskragens oder - bei Flaschen - um den Bauch des Behälters. Eine Steuernocke fungiert hierfür als Öffnungsmittel und eine Spiralfeder oder ein Magnetpaar als Schließmittel der Greifeinrichtung. Dabei wird die Steuernocke einer Greifeinrichtung über eine Schaltklaue als Betätigungsmittel angesteuert, mit deren Hilfe die Greifeinrichtung geöffnet und geschlossen werden kann.

Damit die Greifeinrichtung die zu transportierenden Behälter stabil greifen und führen kann, muss die Greifeinrichtung, insbesondere die Trägerplatte der Transporteinrichtung, auf der die Greifeinrichtung/en montiert sind, auf eine bestimmte Höhe und auf die Größe und Form des Behälters angepasst bzw. eingestellt werden. Das bedeutet, dass für die Installation der Greifeinrichtung in eine bestehende oder neue Reinigungs- und/oder Abfüllanlage für Behälter eingeplant und berechnet werden muss, in welcher Höhe die Greifeinrichtungen angeordnet sein müssen. Dazu werden die Transporteinrichtungen gegebenenfalls individuell und für den Einzelfall ausgerichtet, entwickelt und/oder hergestellt, um eine bestimmte Höhe der Greifeinrichtungen einzustellen. Hierzu muss unter anderem die Länge der Antriebswelle bei der Planung und Herstellung festgelegt werden. Bei einer Montage der Transporteinrichtung wird somit normalerweise die Trägerplatte mit den Greifeinrichtungen auf einer bestimmten Höhe der Antriebswelle der Transporteinrichtung starr befestigt. Das Gleiche hinsichtlich einer bestimmten Höhe gilt auch für eine Ansteuerungsvorrichtung, die mit Ansteuerungselementen die Greifeinrichtungen, insbesondere deren Öffnungsmittel, betätigen und dadurch öffnen und schließen kann.

Des Weiteren muss abhängig von der Größe und Form der Behälter die Anzahl der Greifarmpaare einer Greifeinrichtung und/oder die Form und die Höhe der Greifabschnitte der Greifarmpaare vorabbestimmt und entsprechend angepasst werden.

Eine derart starre Montage der zuvor genannten Komponenten der Transporteinrichtung ist beispielsweise aus der DE 10 2014 107538 A1 bekannt. Allerdings bringen derartige Transporteinrichtungen aufwändige Planungs- und Installationsverfahren mit sich, um sie in vorhandene oder neue Anlagen zur Reinigung oder Befüllung von Behältern zu integrieren. Dadurch steigen sowohl die Kosten als auch der Zeitaufwand. Ebenso ist es bei einer aus dem Stand der Technik bekannten Transporteinrichtung nicht ohne weiteres möglich, Anpassungen der Transporteinrichtungen bei unterschiedlichen Flaschen- oder Behälterformen bzw. - größen oder bei Anlagenänderungen einzuplanen bzw. vorzunehmen. Darüber hinaus offenbart EP 2 186 759 A1 eine Vorrichtung zum Höhenverstellen einer Greif- und Transporteinrichtung nach dem Oberbegriff des Anspruchs 1.

Es ist daher die Aufgabe der vorliegenden Erfindung, eine Höhenverstellvorrichtung für eine Transporteinrichtung der eingangs genannten Art insbesondere dahingehend zu konzipieren, dass abhängig von den mit der Transporteinrichtung mitwirkenden Anlagen eines Behältertransportsystems und von der Form und Größe der Behälter eine einfachere Installation und eine schnellere Anpassung der Transporteinrichtung und insbesondere der auf einer Trägerplatte montierten Greifeinrichtungen ermöglicht werden.

Diese Aufgabe wird erfindungsgemäß durch eine Höhenverstellvorrichtung mit den Merkmalen des Anspruchs 1 gelöst. Danach ist vorgesehen, dass eine Vorrichtung zum Höhenverstellen einer Greif- und Transporteinrichtung zum Greifen, Halten, Führen und Transportieren von insbesondere flaschenartigen Behältern, mit wenigstens einer ersten Stellplatte, an oder auf der auf wenigstens einem Lagerbolzen horizontal schwenkbar sitzend mindestens ein erstes Greifarmpaar mit zangenförmigen Greifabschnitten zum Greifen, Halten und Führen eines Behälters befestigt und mittels einer Schaltachse zwischen einer Aufnahmestellung und einer Greif- oder Transportstellung hin und her bewegbar ist, und mit einer Antriebswelle zum horizontalen Drehen der ersten Stellplatte zum Transport gegriffener Behälter bereitgestellt wird. Die Höhenverstellvorrichtung ist dadurch charakterisiert, dass die erste Stellplatte entlang der Antriebswelle in senkrechter Richtung verfahrbar ist.

Die erfindungsgemäße Höhenverstellvorrichtung bietet zunächst den Vorteil, dass ein einzelnes Einstellen der Greifeinrichtungen ersetzt wird. Dadurch wird der Bedarf an technischem Personal zum Anpassen der Greifeinrichtungen für neue Behälter oder für eine neue Prozessumgebung reduziert. Des Weiteren muss die Stellplatte nicht mehr von den Greifeinrichtungen oder weiteren Elementen befreit werden, um dessen Gewicht, Unhandlichkeit oder Sperrigkeit zu verringern und dadurch dem Personal das Einstellen der Stellplatte zu erleichtern.

Des Weiteren muss die Transporteinrichtung, zumindest hinsichtlich ihrer Höhe, nicht mehr einzeln und für jeden Kundenwunsch geplant und angefertigt werden. Die einheitliche Verwendung von Antriebswellen bestimmter Länge vereinfacht ebenfalls die Produktion der Transporteinrichtungen und reduziert somit die Kosten. Des Weiteren sind mittels der Höhenverstellvorrichtung die Transporteinrichtungen universell in Betrieben anpassbar und einsetzbar, selbst an bestehende Anlagen.

Ein weiterer Vorteil ergibt sich dadurch, dass die Höhenverstellvorrichtung die Stellplatte der Transporteinrichtung jederzeit (bis auf beim Greifen und Führen von Behältern) auf eine bestimmte Höhe verschieben kann. Dadurch werden Vorbereitungen zur Anpassung der Transporteinrichtung auf unterschiedliche Behältergrößen und -formen sowie unterschiedliche Zu-/Abförderanlagen (z.B. Fließbänder, weitere Transporteinrichtungen) zeitlich reduziert und vereinfacht.

Vorzugsweise ist zum Verfahren der ersten Stellplatte ein Stellantrieb mit einem entlang der Antriebswelle verfahrbaren Hubzylinder und einer an der Antriebswelle befestigten Nabe vorgesehen, wobei die Nabe innerhalb des Hubzylinders angeordnet ist und eine erste Hubkammer und eine zweite Hubkammer oberhalb und unterhalb der Nabe aufweist. Dadurch wird ein pneumatischer oder hydraulischer Antrieb bereitgestellt, der keiner direkten Stromzufuhr an dem Stellantrieb bedarf. Vielmehr kann das Druckfluid auch von einer zentralen Quelle über Schläuche an den jeweiligen Stellantrieb herangeführt werden.

Es hat sich für manche Anwendungen alternativ ebenfalls als vorteilhaft herausgestellt, dass zum Verfahren der ersten Stellplatte ein Stellantrieb mit einer rotierbaren Spindel und einer gegenüber der ersten Stellplatte ortsfesten Spindelmutter vorgesehen ist. Hierbei handelt es sich um eine alternative Möglichkeit, die Stellplatte anzuheben und abzusenken, die im Vergleich zu einem Stellantrieb mit Hubachse weniger Kraft braucht und ein genaueres Ansteuern der gewünschten Höhe der Greifeinrichtung ermöglicht.

In einer weiteren vorteilhaften Ausführungsform der Erfindung ist eine oberhalb der ersten Stellplatte angeordnete, an der Antriebswelle rotierbar gelagerte Ansteuerungsvorrichtung zum Ansteuern der Schaltachse des mindestens einen, ersten Greifarmpaars und eine mit der Ansteuerungsvorrichtung verbundene Arretierung, mittels derer eine Rotationsbewegung der Ansteuerungsvorrichtung auf der Antriebswelle unterbunden wird, vorgesehen. Daraus ergibt sich der Vorteil, dass die Ansteuerungsvorrichtung oberhalb der Greifarmpaare anordbar und zur Einstellung leichter zugänglich ist.

Gemäß der Erfindung weist die Vorrichtung eine unterhalb der ersten Stellplatte angeordnete Trägerplatte auf, an oder auf der wiederum auf wenigstens einem Lagerbolzen horizontal schwenkbar sitzend mindestens ein zweites Greifarmpaar mit zangenförmigen Greifabschnitten zum Greifen, Halten und Führen eines Behälters befestigt und ebenfalls mittels einer Schaltachse zwischen einer Aufnahmestellung und einer Greif- oder Transportstellung hin und her bewegbar ist, wobei die Trägerplatte ebenfalls zum Transport gegriffener Behälter mit der Antriebswelle horizontal drehbar ist. Durch die ersten und zweiten Greifarmpaare können vorteilhafterweise Behälter unterschiedlicher Größe stabil gegriffen und transportiert werden, wobei die ersten Greifarmpaare durch deren Höhenverstellung an die Größe der Behälter angepasst werden können. Diese Anpassungsfähigkeit ist insbesondere auch beim Etikettieren der Behälter vorteilhaft, da der für ein Etikett vorgesehene Bereich auf dem Behälterumfang von den Greifarmen ausgespart werden kann.

Vorzugsweise ist eine weitere Ausführungsform durch eine oberhalb der ersten Stellplatte angeordnete zweite Stellplatte gekennzeichnet, an oder auf der wiederum auf wenigstens einem Lagerbolzen horizontal schwenkbar sitzend mindestens ein drittes Greifarmpaar mit zangenförmigen Greifabschnitten zum Greifen, Halten und Führen eines Behälters befestigt und wiederum mittels einer Schaltachse zwischen einer Aufnahmestellung und einer Greif- oder Transportstellung hin und her bewegbar und die zweite Stellplatte entlang der Antriebswelle in senkrechter Richtung verfahrbar ist. Auf Grund des dritten höhenverstellbaren Greifarmpaars einer Greifeinrichtung ist ein noch besseres und stabileres Greifen und Führen von insbesondere großen Behältern möglich, da das dritte Greifarmpaar abhängig von der Größe und der Form des Behälters in seiner Höhe bzw. Position eingestellt werden kann und insgesamt mehr Haltepunkte zwischen den Greifarmen und dem Behälter bietet.

Des Weiteren hat es sich als herausgestellt, dass das mindestens erste Greifarmpaar, das mindestens zweite Greifarmpaar und ggf. das mindestens dritte Greifarmpaar gemeinsam auf wenigstens einem Lagerbolzen horizontal schwenkbar sitzend mittels einer gemeinsamen Schaltachse zwischen einer Aufnahmestellung und einer Greif- oder Transportstellung hin und her bewegbar sind, wobei die Länge des wenigstens einen Lagerbolzens und die Länge der Schaltachse eine Höhenverstellung mindestens einer der Greifarmpaare zulässt. Daraus ergibt sich der Vorteil, dass eine Greifeinrichtung mit mehreren Greifarmpaaren weniger Bauteile benötigt und trotzdem eine Höhenverstellbarkeit der Greifarmpaare erlaubt.

In einer weiteren vorteilhaften Ausführungsform ist der wenigstens eine Lagerbolzen mit seinem unteren Ende lösbar in ein Sackloch und die Schaltachse mit ihrem unteren Ende lösbar in eine Senkbohrung in der ersten Stellplatte bzw. in der Trägerplatte steckbar, wobei die Schaltachse an ihrem unteren Ende einen Stift aufweist, der die Senkbohrung durchdringt und unterhalb der Stellplatte bzw. der Trägerplatte lösbar mit einer Schaltklaue verbindbar ist, und wobei der wenigstens eine Lagerbolzen mit seinem oberen Ende und die Schaltachse mit ihrem oberen Ende gemeinsam in einem lösbar aufsteckbaren Gegenlager aufgenommen sind. Hierbei handelt es sich um eine alternative Befestigungsmöglichkeit (anstelle eines Aufnahmesockels unten) für den wenigstens einen Lagerbolzen und die Schaltachse. Des Weiteren wird der Auf- und Abbau der Bauteile auf den genannten Platten und damit auch ein Austausch dieser Bauteile vereinfacht.

Vorzugsweise weist die Schaltachse einen unteren Abschnitt und einen oberen Abschnitt auf, die miteinander steckbar verbunden sind. Da die verschiedenen Abschnitte unterschiedliche Aufgaben und somit unterschiedliche Formen und Längen haben, wird die Herstellung der Schaltachse vereinfacht und kostengünstiger. Ein weiterer Vorteil dieser modularen Bauweise besteht darin, dass sowohl der bzw. die Lagerbolzen als auch die Schaltachsen in ihrer Länge anpassbar und somit in einfacher Weise austauschbar sind, während das Gegenlager und die unten befindliche Schalteinheit bzw. Schaltklaue immer gleich bleiben.

Vorzugsweise ist das Gegenlager im Wesentlichen dreieck- oder trapezförmig ausgebildet. Dadurch ergibt sich der Vorteil, dass die kleinstmögliche und somit kostengünstigste Form des Gegenlagers bereitgestellt wird.

Des Weiteren sind vorzugsweise an oder auf der ersten Stellplatte und/oder an oder auf der zweiten Stellplatte und/oder an oder auf der Trägerplatte ihrem Umfang entsprechend beliebig viele erste Greifarmpaare bzw. zweite Greifarmpaare bzw. dritte Greifarmpaare befestigt. Hierdurch ist es möglich, die Anzahl der gleichzeitig transportierbaren Behälter zu erhöhen.

In einer weiteren vorteilhaften Ausführungsform sind die Gegenlager für den wenigstens einen Lagerbolzen und die Schaltachsen mehrerer Greifeinheiten einstückig ausgebildet oder durch einen Ring miteinander verbunden. Dies hat den Vorteil, den Auf- und Abbau der Greifeinrichtungen zu vereinfachen und die Anzahl der einzelnen Bauteile zu verringern.

Neben den zuvor beschriebenen Ausführungsformen betrifft die Erfindung folgende zusätzliche und/oder alternative Ausgestaltungsmöglichkeiten:
Eine weitere Höhenverstellvorrichtung, insbesondere deren Stellantrieb, kann derart ausgebildet sein, jedes Greifarmpaar einer Transporteinrichtung einzeln anzuheben und abzusenken. Hierzu bedarf es für jedes Greifarmpaar einer eigenen Hubachse oder Spindel, die durch einen oder mehrere Stellantriebe bereitgestellt werden. Daraus ergibt sich der Vorteil, dass Behälter verschiedener Größe und Form gleichzeitig transportiert werden können. Hierzu wird vorab der zu greifende Behälter gescannt, dessen Form und Größe festgestellt und anschließend das oder die greifenden Greifarmpaare in seiner/ihren Position(en)/Höhe(en) verstellt bzw. angepasst.

In einer weiteren Höhenverstellvorrichtung sind sowohl die Stellplatten als auch die Trägerplatten und damit die darauf befestigten und/oder die daran verbundenen Greifarmpaare höhenverstellbar und mittels eines oder mehrerer Stellantriebe individuell oder gemeinsam anhebbar oder absenkbar.

Die Ansteuerung der Greifeinrichtungen, insbesondere deren Schaltklaue, kann mittels einer Ansteuerungsvorrichtung entweder von oben (oberhalb der obersten Stellplatte) oder von unten (unterhalb der untersten Stell-/Trägerplatte) erfolgen.

Der mindestens eine Stellantrieb ist auf einer Transporteinrichtung, insbesondere einer Antriebswelle oder einer Stell- oder Trägerplatte, befestigbar und mit der mindestens einen höhenverstellbaren Stell-/Trägerplatte oder dem mindestens einen höhenverstellbaren Greifarmpaar verbindbar, um im verbundenen Zustand die zuvor genannten höhenverstellbaren Objekte entlang bzw. parallel zur Antriebswelle zu verfahren.

Während vorstehend beschrieben wurde, dass ein Greifarmpaar, also zwei Greifarme schwenkbar gemeinsam auf einem Lagerbolzen sitzen, ist es in der Praxis üblich, jedem Greifarm einen eigenen Lagerbolzen zuzuordnen. Folglich sitzen dann bei einer gestaffelten Anordnung mehrerer Greifarmpaare übereinander diese gemeinsam auf zwei Lagerbolzen.

Weitere Einzelheiten und Vorteile der Erfindung sollen nun anhand einiger in den Zeichnungen dargestellter und bevorzugter Ausführungsbeispiele näher erläutert werden. Es zeigen:
- Figur 1: eine perspektivische Ansicht auf eine höhenverstellbare Transporteinrichtung mit Trägerplatte und Greifeinrichtungen, sowie mit Ansteuerungsvorrichtung und Arretierung;
- Figur 2: einen Querschnitt einer Hälfte eines Stellantriebs für eine höhenverstellbare Transporteinrichtung entlang der Antriebswelle;
- Figur 3: eine Draufsicht auf die Transporteinrichtung von Figur 1;
- Figur 4: einen Querschnitt durch eine höhenverstellbare Transporteinrichtung von Figur 1;
- Figur 5: eine perspektivische Ansicht auf eine weitere Transporteinrichtung mit oberen höhenverstellbaren Greifarmpaaren und unteren festen Greifarmpaaren;
- Figur 6: eine Draufsicht auf die Transporteinrichtung von Figur 5;
- Figur 7: einen Querschnitt durch die Transporteinrichtung von Figur 5;
- Figur 8: eine Seitenansicht auf eine weitere Transporteinrichtung mit oberen und unteren höhenverstellbaren Greifarmpaaren;
- Figur 9: eine Draufsicht auf die Transporteinrichtung von Figur 8;
- Figur 10: einen Querschnitt durch die Transporteinrichtung von Figur 8;
- Figur 11: eine kombinierte Quer- und Seitenansicht auf eine weitere Transporteinrichtung nach dem Prinzip der Transporteinrichtung von Figur 8;
- Figur 12: eine perspektivische Explosionsansicht auf eine steckbare Drehachseinrichtung aus einer Transporteinrichtung von Figur 8, 9 und 10;
- Figur 13: eine seitliche Explosionsansicht auf die steckbare Drehachseinrichtung von Figur 12;
- Figur 14: eine perspektivische Ausschnittsansicht auf eine Transporteinrichtung mit höhenverstellbaren Greifarmpaaren, insbesondere auf eine Drehachseinrichtung;
- Figur 15: eine perspektivische Ausschnittsansicht auf die Transporteinrichtung von Figur 11, insbesondere auf dessen Drehachseinrichtung; und
- Figur 16: eine perspektivische Ansicht auf eine Drehachseinrichtung der Transporteinrichtung von Figur 11.

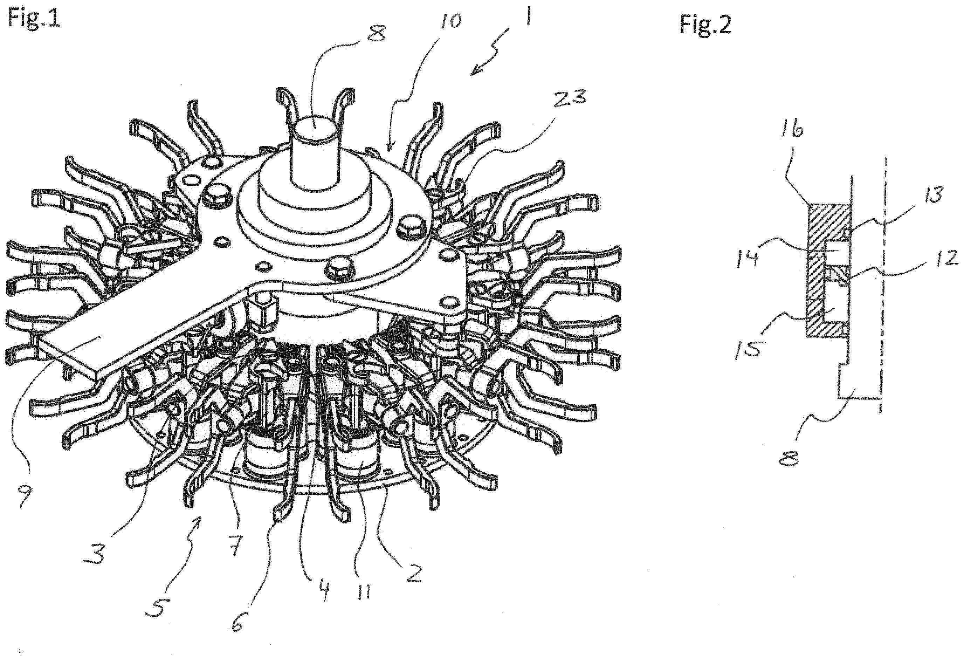

Figur 1 zeigt eine perspektivische Ansicht auf eine höhenverstellbare Transporteinrichtung 1 mit einer Stellplatte 2 und zwölf Greifeinrichtungen, sowie mit einer Ansteuerungsvorrichtung 10 und einer Arretierung 9. Jede Greifeinrichtung weist ein Greifarmpaar 5 aus zwei Greifarmen mit Greifabschnitten 6, zwei Lagerbolzen 3 und 4 für die Greifarme, eine Schaltachse 7 mit einer Schaltklaue 23 und einen Aufnahmesockel 11, in dem die Lagerbolzen 3,4 und die Schaltachse befestigt sind, auf. Die Stellplatte 2 und die darauf befestigten Greifeinrichtungen sind mittels einer Antriebswelle 8 der Transporteinrichtung 1 rotierbar und, um eine Unwucht zu vermeiden, achsensymmetrisch um eine Antriebswelle 8 angeordnet und/oder ausgebildet. Die Ansteuerungsvorrichtung 10 ist auf der Antriebswelle 8 drehbar gelagert, damit die Ansteuerungsvorrichtung 10 beim Betrieb der Transporteinrichtung 1 nicht mitrotiert und die Greifeinrichtungen, insbesondere die Schaltklauen 23, immer an mindestens einer bestimmten Position ansteuert. Zusätzlich wird eine Arretierung 9 verwendet, um eine Rotation der Ansteuerungsvorrichtung 10 mit der Antriebswelle 8 vollständig zu unterbinden. Die Arretierung 9 ist als sich von der Ansteuerungsvorrichtung 10 erstreckender Steg ausgebildet und mit einem unbeweglichen bzw. nicht mit der Antriebswelle 8 rotierenden Gegenstand, wie z.B. einer Wand oder einem Pfosten, verbunden. Sowohl die Stellplatte 2 als auch die Ansteuerungsvorrichtung 10 sind mit der Antriebswelle 8 verbunden und entlang dieser Antriebswelle 8 (senkrecht) verfahrbar. Damit die Stellplatte 2 trotzdem mit der Antriebswelle 8 mitrotiert, ist die Stellplatte 2 entweder entlang von senkrecht verlaufenden Nuten bzw. Schienen (nicht dargestellt) an den Verbindungsstellen zwischen Stellplatte 2 und Antriebswelle 8 verfahrbar oder mit einem Befestigungselement (nicht dargestellt) mit der Antriebswelle 8 fixiert. Dieses Befestigungselement kann auch dazu dienen, die Höhe der Stellplatte 2 an der Antriebswelle 8 zu arretieren.

Figur 2 zeigt einen Querschnitt einer Hälfte eines Stellantriebs, insbesondere für eine höhenverstellbare Transporteinrichtung, wobei der Querschnitt entlang der Antriebswelle 8 verläuft. Der Querschnitt zeigt Teile des Stellantriebs, die auf der linken Seite der Antriebswelle 8 liegen. Der Stellantrieb ist vorzugsweise achsensymmetrisch zur Antriebswelle ausgebildet. Der Stellantrieb ist pneumatisch oder hydraulisch und weist eine Sternnabe 12 und einen Hubzylinder 16 auf. Die Nabe 12 ist an der Antriebswelle 8 fest verbunden, während im Gegensatz hierzu der Hubzylinder 16 entlang der Antriebswelle 8 verfahrbar ist und insbesondere um die Antriebswelle 8 rotierbar sein kann. Die Nabe 12 ist scheibenförmig und innerhalb eines zylinderförmigen Hohlraums des Hubzylinders 16 angeordnet. Der Hohlraum und die Nabe 12 sind derart ausgebildet ist, dass ein Verfahren des Hubzylinders entlang der Antriebswelle 8 möglich ist und durch die Ausbildung des Hubraums und der Nabe die maximale Hubstrecke des Stellantriebs bestimmt wird. Durch die Nabe 12 wird der Hohlraum des Hubzylinders in eine obere erste Kammer 14 und eine untere zweite Kammer 15 luft- und/oder flüssigkeitsdicht unterteilt. Um eine Trennung zwischen erster und zweiter Kammer 9 und 10 und den jeweils darin befindlichem Arbeitsfluid zu verbessern, sind an den oberen und unteren Kontaktstellen von dem Hubzylinder 16 und der Antriebswelle 8 als auch von dem Hubzylinder 16 und der Nabe 12 Dichtungselemente 13, insbesondere in Form von Dichtungsringen aus Kunststoff, angeordnet. Zwischen der Nabe 12 und der Antriebswelle 8 ist ebenfalls ein gleichartiges Dichtungselement angeordnet, wobei in alternativen Stellantrieben dieses Dichtungselement nicht notwendig ist, wenn die Nabe 12 an die Antriebswelle geschweißt oder aufgepresst wurde. Die Dichtungselemente 13 sind jeweils in einer umlaufenden Vertiefung bzw. Nut des Hubzylinders 16 und der Nabe 12 angeordnet.

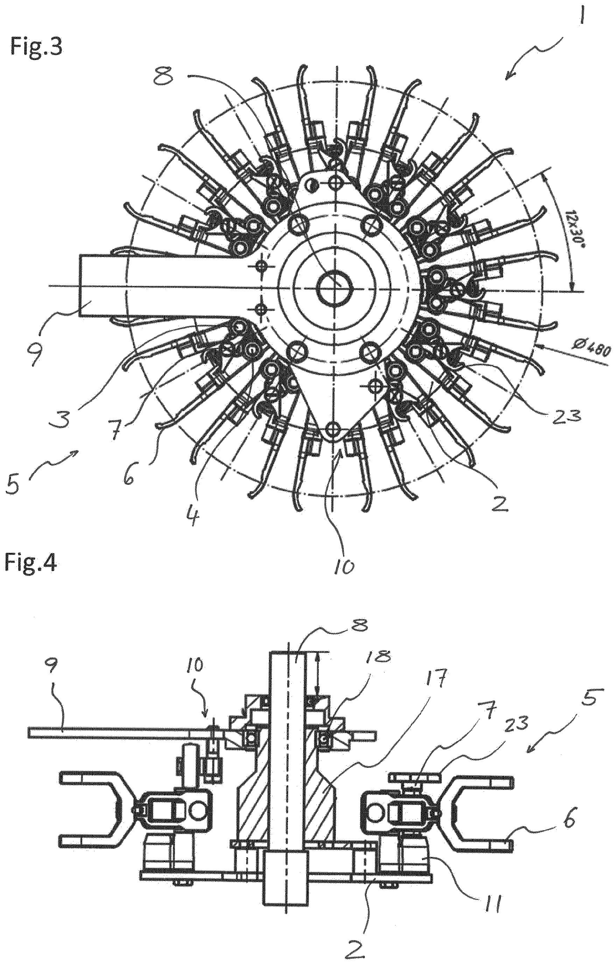

Figur 3 zeigt eine Draufsicht auf die Transporteinrichtung von Figur 1. Die Greifeinrichtungen, insbesondere die Greifarmpaare 5, sind achsensymmetrisch zur Antriebswelle 8 angeordnet. Gut erkennbar sind die Schaltklauen 23 der Greifeinrichtungen, die von den Ansteuerungselementen (z.B. Bolzen) der Ansteuerungsvorrichtung 10 betätigt werden und somit eine zwischen einem Greifarmpaar 5 der Greifeinrichtung angeordnete Schaltachse (nicht erkennbar) drehen. Durch das Drehen der Schaltachse wird die Greifeinrichtung in die Greif- oder Öffnungsstellung versetzt, um Behälter zu greifen oder loszulassen.

Figur 4 zeigt einen Querschnitt durch eine höhenverstellbare Transporteinrichtung von Figur 1 mit einer Stellplatte 2 und darauf montierten Greifeinrichtungen mit jeweils einem Greifarmpaar 5. Die Stellplatte 2 ist scheibenförmig und koaxial zur Antriebswelle 8 angeordnet. Die Greifeinrichtungen weisen jeweils ein Greifarmpaar 5 mit Greifabschnitten 6, eine Schaltachse 7 mit einer Schaltklaue 23, zwei Lagerbolzen und einen Aufnahmesockel 11 für die Schaltachse 7 und die Lagerbolzen auf. Die Greifeinrichtungen sind auf der Oberseite am Rand der Stellplatte 2 angeordnet und befestigt. Zusätzlich weist die Stellplatte 2 ein Aufsatzelement 17 auf, auf dem eine Ansteuerungsvorrichtung 10 drehbar gelagert ist. Die Ansteuerungsvorrichtung 10 weist Ansteuerungselemente zum Ansteuern der Greifeinrichtungen, insbesondere deren Schaltklaue 23, und eine Arretierung 9 auf, wobei die Arretierung 9 die Ansteuerungsvorrichtung 10 an einem Rotieren mit der Antriebswelle 8 hindert. Die Ansteuerungsvorrichtung 10 selbst ist mit einem ersten Kugellager mit der Antriebswelle 8 und mit einem zweiten Kugellager 18 mit dem Aufsatzelement 17 jeweils fest, aber drehbar verbunden. Sobald die Antriebswelle 8 und die Stellplatte 2 rotieren, verharrt die Ansteuerungsvorrichtung 10 an einer durch die Arretierung 9 vorbestimmten Position. Dadurch werden die Greifeinrichtungen nur an einer bestimmten Position angesteuert und somit deren Greifarmpaar 5 geöffnet oder geschlossen. Die Antriebswelle 8 weist einen oberen und einen unteren Abschnitt auf, wobei der Radius des oberen Abschnitts kleiner ist als der Radius des unteren Abschnitts. Die dadurch gebildete Stufe zwischen oberem und unterem Abschnitt wird in Verbindung mit der Stellplatte 2, dem Aufsatz 17 und/oder einem anderen Teil der Transporteinrichtung eine untere Grenze der möglichen Verfahrstrecke der Stellplatte 2 gebildet.

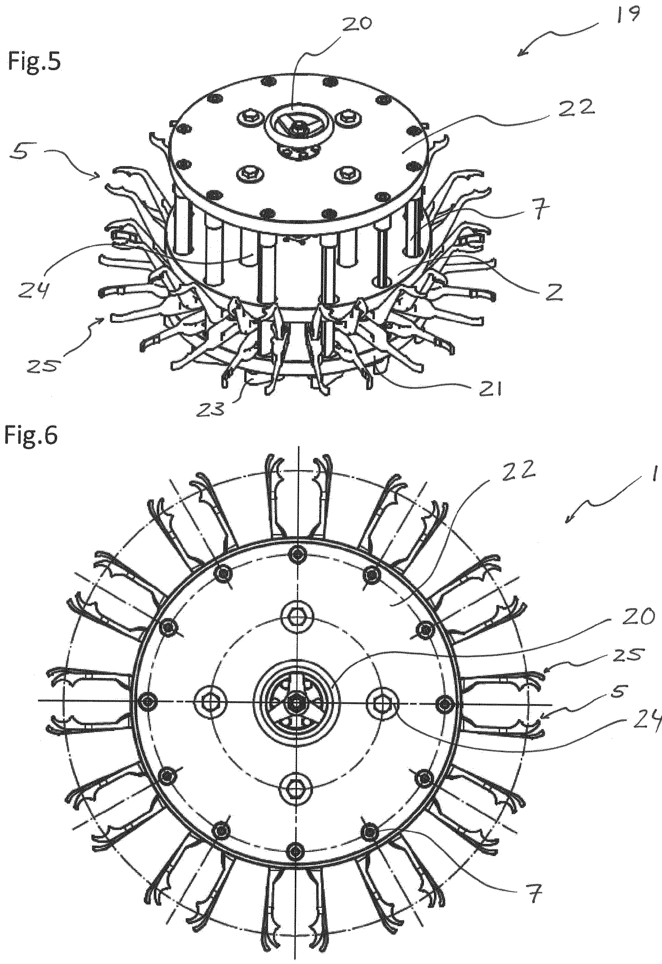

Figur 5 zeigt eine perspektivische Ansicht auf eine weitere Transporteinrichtung 19 mit oberen höhenverstellbaren (ersten) Greifarmpaaren 5 und unteren festen (zweiten) Greifarmpaaren 25. Die Transporteinrichtung 19 weist zwölf Greifeinrichtungen mit jeweils einem ersten und einem zweiten Greifarmpaar 5, 25. Des Weiteren weist die Transporteinrichtung 19 eine höhenverstellbare Stellplatte 2, eine festmontierte Trägerplatte 2, eine Fixierungsplatte 22 und ein Handrad 20 als manuellen Stellantrieb zur Höhenverstellung der Stellplatte 2 auf. Die ersten Greifarmpaare 5 sind an der Unterseite der Stellplatte 2 und die zweiten Greifarmpaare 25 an der Oberseite der Trägerplatte 21 befestigt. Die ersten Greifarmpaare 5 sind derart ausgebildet, den Flaschenhals eines Behälters, insbesondere einer Flasche, zu greifen und zu halten. Die zweiten Greifarmpaare 25 sind derart ausgebildet, den Flaschenbauch eines Behälters, insbesondere einer Flasche, zu greifen und zu halten. Somit ist in der Greifstellung der Abstand der Greifabschnitte der ersten Greifarmpaare 5 geringer als der Abstand der Greifabschnitte der zweiten Greifarmpaare 25. Jede Greifeinrichtung hat eine Schaltachse 7 mit einer unterhalb der Trägerplatte 21 angeordneten Schaltklaue 23, wobei jede Schaltachse 7 gleichzeitig das erste und das zweite Greifarmpaar 5, 25 der entsprechenden Greifeinrichtung öffnen bzw. schließen kann. Die Schaltachsen 7 sind in der Trägerplatte 21 gelagert und erstrecken sich durch entsprechende Bohrungen in der Stellplatte 2 bis zur Fixierungsplatte 22, in der die Schaltachsen 7 gegengelagert sind. Jedes Greifarmpaar, sowohl die ersten als auch die zweiten Greifarmpaare 5, 25, hat sein eigenes Paar an Lagerbolzen (nicht erkennbar). Somit hat jede Greifeinrichtung der Transporteinrichtung 19 vier Lagerbolzen, wovon zwei in der Stellplatte 2 befestigt sind und das erste Greifarmpaar 5 lagern und die anderen zwei in der Trägerplatte 21 befestigt sind und das zweite Greifarmpaar 25 lagern. Koaxial zur Antriebswelle der Transporteinrichtung 19 ist das Handrad 20 mit einer Spindel bzw. einer Achse mit einem helixförmigen Gewinde (nicht erkennbar) angeordnet. Die Spindel ist in der Fixierungsplatte 22 drehbar gelagert und erstreckt sich durch eine Spindelmutter (nicht erkennbar) der Stellplatte 2 bis zur Trägerplatte 21. Die Spindelmutter ist fest in der Stellplatte 2 integriert. Anstelle der Spindelmutter kann die Stellplatte 2 auch eine Bohrung mit einem Gegengewinde für die Spindel aufweisen. Die Stellplatte 2 ist durch vier Abstandsbolzen 24, die zwischen der Trägerplatte 21 und der Fixierungsplatte 22 angeordnet und befestigt sind, gelagert und entlang der Antriebswelle bzw. der Abstandsbolzen 24 verfahrbar. Durch eine Drehung der Spindel mittels des Handrads 20 kann die Stellplatte 2 und somit die ersten Greifarmpaare 5 angehoben oder abgesenkt werden.

Figur 6 zeigt eine Draufsicht auf die Transporteinrichtung 19 von Figur 5. Die punkt- bzw. achsensymmetrische Anordnung und Ausbildung der Bauteile, wie z.B. die Abstandsbolzen 24, das Handrad 20, die Schaltachsen 7 und die Greifarmpaare 5,25, der Transporteinrichtung 19 (die auch bei alle anderen hierin beschriebenen Transporteinrichtungen vorzugsweise vorliegt) verhindert eine Unwucht bei der Rotation der Transporteinrichtung 19. Obwohl nicht direkt erkennbar, sind die Radien der Stellplatte, der Trägerplatte und der Fixierungsplatte 22 identisch oder fast gleich. Die zwölf Schaltachsen 7 sind auf einem Kreis am äußeren Rand der Fixierungsplatte 22 mit gleichem Abstand zu benachbarten Schaltachsen angeordnet und an der Fixierungsplatte 22 drehbar gelagert. Die vier Abstandsbolzen 24 sind auf einem anderen konzentrisch liegenden Kreis mit kleinerem Radius angeordnet und an der Fixierungsplatte 22 befestigt.

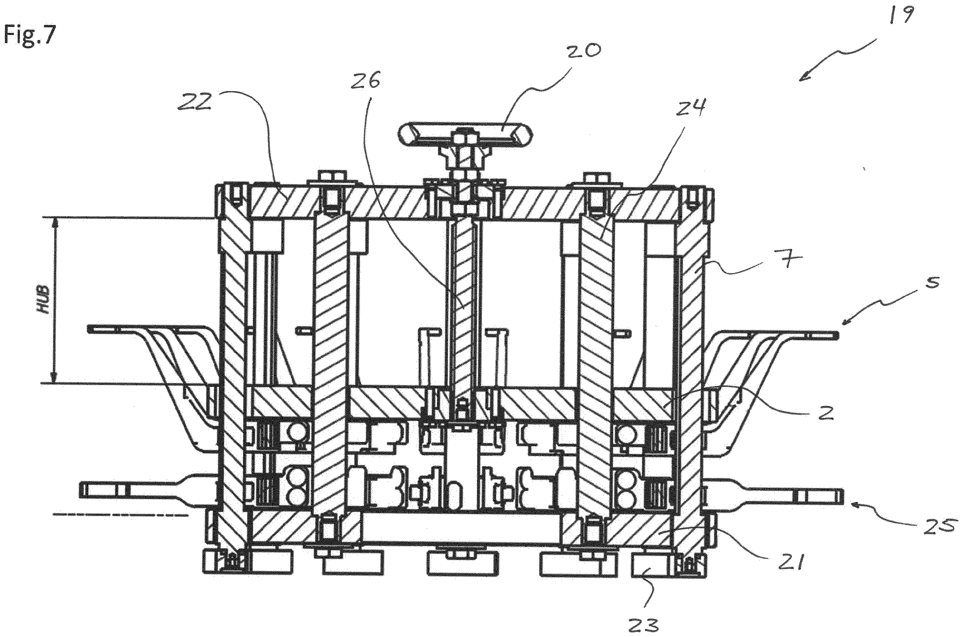

Figur 7 zeigt einen Querschnitt durch die Transporteinrichtung 19 von Figur 5. Die Hubstrecke der Stellplatte 2 wird durch die Länge der Spindel 26 bis zur Fixierungsplatte 24 abzüglich der Dicke bzw. Höhe der Stellplatte 2 bestimmt. Die Stellplatte 2 lagert auf einer Unterlegscheibe, die am Ende der Spindel 26 befestigt ist. Die Lagerbolzen 24 erstrecken sich von der Unterseite der Trägerplatte 21 bis zur Oberseite der Fixierungsplatte 22 und sind an beiden Ende mit Unterlegscheiben und Schrauben mit den entsprechenden Platten 21, 22 befestigt. Die Abstandsbolzen 24 haben an beiden Enden einen Abschnitt mit kleinerem Durchmesser (gegenüber dem mittleren bzw. restlichen Abschnitt des Abstandsbolzens) und bilden dadurch eine Abstufung, auf denen die Platten 21, 22 aufliegen. Die Bohrungen der Stellplatte 2, durch die die Abstandsbolzen 24 verlaufen, haben einen Durchmesser, der im Wesentlichen dem der Abstandsbolzen 24 entspricht und ein Entlanggleiten bzw. Verfahren der Stellplatte 2 ohne ein Kippen ermöglicht. Die anderen Bohrungen der Stellplatte, durch die die Schaltachsen 7 verlaufen, haben einen größeren Durchmesser als der des Schaltachsenabschnitts, in dem die Steuernocke ausgebildet ist. Lediglich ein Abschnitt der Schaltachse 7, der sich von der Unterseite der Fixierungsplatte 22 nach unten erstreckt und der Dicke der Stellplatte 2 entspricht, weist im Wesentlichen den gleichen Durchmesser wie den der Bohrung auf. Dieser Abschnitt ist nicht als Nocke, sondern zylinderförmig ausgebildet, da dieser Abschnitt nicht mit dem ersten Greifarmpaar 5 in Eingriff kommen und somit nicht der Steuerung des ersten Greifarmpaars 5 dienen kann. Die Schaltachse 7, die Trägerplatte 21 und die Fixierungsplatte 22 sind derart ausgebildet, dass die Schaltachse 7 in den genannten Platten 21, 22 drehbar gelagert und in senkrechter Richtung nicht verschiebbar ist.

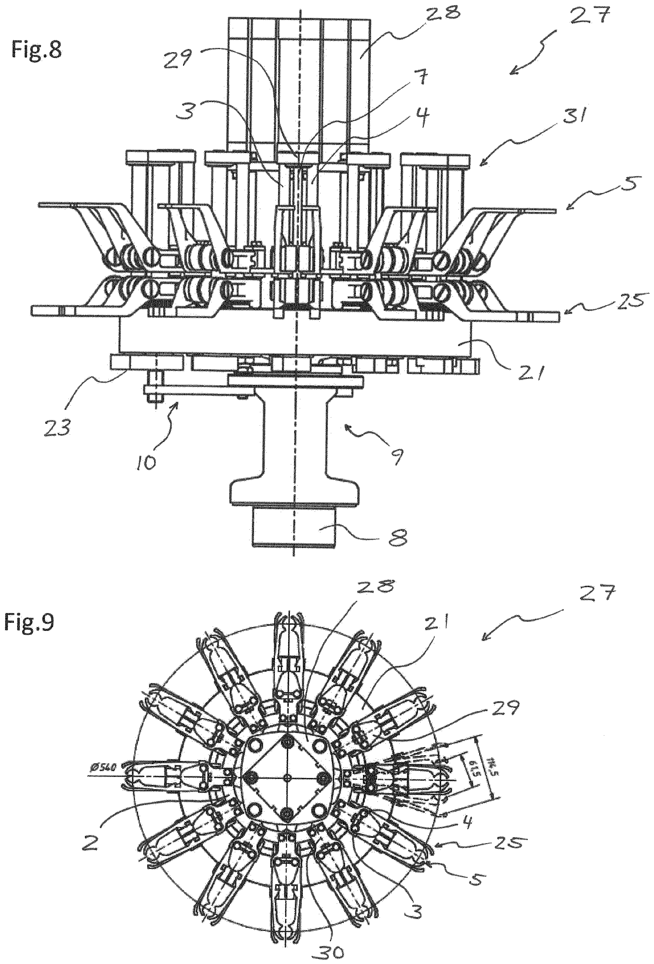

Figur 8 zeigt eine Seitenansicht auf eine weitere Transporteinrichtung 27 mit oberen (ersten) und unteren (zweiten) höhenverstellbaren Greifarmpaaren 5 und 25. Die Transporteinrichtung 27 weist eine Trägerplatte 21 mit darauf befestigten zwölf Greifeinrichtungen, eine höhenverstellbare Stellplatte (nicht erkennbar), eine Ansteuerungsvorrichtung 10 mit einer Arretierung 9, eine Antriebswelle 8 sowie einen Stellantrieb 28 zum Höhenverstellen der Stellplatte auf. Im Gegensatz zu den Greifeinrichtungen der Transporteinrichtung 19 aus Figur 5 weist jede der zwölf Greifeinrichtungen aus Figur 8 im Wesentlichen nur zwei Lagerbolzen 3 und 4 (anstelle von vier Lagerbolzen) für beide Greifarmpaare 5, 25 auf, wobei die Länge der Lagerbolzen 3, 4 gegenüber der Höhe der darauf gelagerten Greifarmpaaren 5, 25 überdimensioniert ist. Dadurch sind beide Greifarmpaare 5, 25 entlang der Lagerbolzen 3, 4 verschiebbar bzw. höhenverstellbar. Des Weiteren weist jede Greifeinrichtung das erste und zweite Greifarmpaar 5, 25 und eine steckbare Drehachseinrichtung 31 mit den beiden Lagerbolzen 3,4, einer Schaltachse 7, einer Schaltklaue 23 und einem Gegenlager 29 für die beiden Lagerbolzen 3, 4 und die Schaltachse 7 auf. Jede Greifeinrichtung, insbesondere deren Lagerbolzen 3, 4 und Schaltachse 7, ist in der Trägerplatte 21 befestigt. Zusätzlich ist jede Schaltachse 7 in der Platte 21 und im entsprechenden Gegenlager 29 einer Drehachseinrichtung 31 drehbar gelagert. Die Ansteuerungsvorrichtung 10 und die Arretierung 9 sind unterhalb der Trägerplatte 21 an der Antriebswelle 8 angeordnet, wobei die Ansteuerungsvorrichtung 10 mit den unterhalb der Trägerplatte 21 angeordneten Schaltklauen 23 in Eingriff kommen und somit die Schaltachsen 7 betätigen kann. Die Ansteuerungsvorrichtung 10 und die Arretierung 9 sind entweder an die Antriebswelle 8 drehbar gelagert oder nicht mit dieser direkt verbunden, um nicht mit der Antriebswelle 8 mitzurotieren. Der Stellantrieb 28 ist über Abstandsbolzen (nicht erkennbar) auf der Trägerplatte 21 befestigt. Des Weiteren weist der Stellantrieb 28 eine Hubachse (nicht erkennbar) auf, die mit der höhenverstellbaren Stellplatte verbunden ist. Der Stellantrieb 28 ist ausgebildet, die Hubachse und somit die Stellplatte und die damit verbundenen ersten Greifarmpaare 5 entlang der Lagerbolzen 3, 4 anzuheben und abzusenken. Die zweiten Greifarmpaare 25 sind zwar ebenfalls auf den Lagerbolzen 3, 4 gelagert, aber in dieser Ausführungsform auf Grund von Sicherungselementen, wie z.B. einen Sicherungs- bzw. Nutenring, nicht höhenverstellbar. Dadurch wird sichergestellt, dass beim Betätigen der Schaltachse 7 oder Greifen und Halten von Flaschen das zweite Greifarmpaar 25 nicht ungewollt entlang der Lagerbolzen 3, 4 verschoben wird.

Figur 9 zeigt eine Draufsicht auf die Transporteinrichtung 27 von Figur 8. Ähnlich wie in den Figuren 3 und 6 gezeigt, sind die rotierenden Bauteile der Transporteinrichtung punkt- bzw. achsensymmetrisch zur Antriebswelle ausgebildet und angeordnet, um eine Unwucht der Transporteinrichtung 27 beim Rotieren zu vermeiden. Des Weiteren ist die höhenverstellbare Stellplatte 2 erkennbar, die mittels Verbindungselementen 30 mit den ersten Greifarmpaaren 5 verbunden ist. Sobald die Stellplatte 2 mittels des Stellantriebs 28 angehoben oder gesenkt wird, werden automatisch die ersten Greifarmpaare 5 durch deren Führung mittels der Verbindungselemente 30 entlang der Lagerbolzen 3, 4 angehoben oder gesenkt.

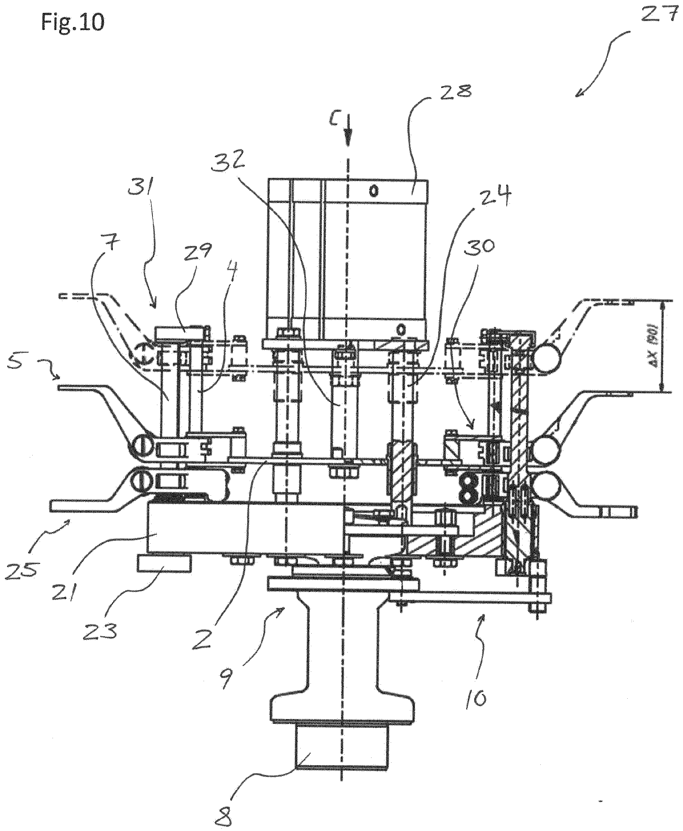

Figur 10 zeigt einen rechts neben einer Achse C dargestellten Querschnitt durch die Transporteinrichtung 27 von Figur 8 sowie eine links neben der Achse C dargestellte Seitenansicht der Transporteinrichtung 27. Die Achse C wird durch die Symmetrieachse der Antriebswelle 8 gebildet. Die Transporteinrichtung 27 weist die Trägerplatte 21 (vorzugsweise aus Kunststoff) mit darauf befestigten Greifeinrichtungen, die höhenverstellbare Stellplatte 2 mit den Verbindungselementen 30, die Ansteuerungsvorrichtung 10 mit der Arretierung 9, die Antriebswelle 8 sowie den Stellantrieb 28 mit der Hubachse 32 zum Höhenverstellen der Stellplatte 2 auf. Die Stellplatte 2 wird auf einer am Ende der Hubachse 32 befestigten Schraube gelagert. Da im Gegensatz zur Transportvorrichtung 19 aus Figur 5 bzw. 7 die Stellplatte 2 mittels der Hubachse 32 (anstelle der Spindel 26) angehoben oder abgesenkt werden kann, bedarf es keines Gewindes für eine Spindel. Dadurch ist die Stellplatte 2 der Transportvorrichtung 27 gegenüber der der Transportvorrichtung 19 dünner bzw. niedriger. Das Verbindungselement 30 ist am Rand der Stellplatte 2 befestigt und weist ein oberes und ein unteres Führungselement auf, die mittels Abstandshülsen voneinander beabstandet und parallel zueinander angeordnet sind. Das untere Führungselement ist direkt an der Unterseite der Stellplatte 2 montiert, während das obere Führungselement über die Abstandshülsen auf der Oberseite der Stellplatte 2 befestigt ist. Die Führungselemente sind identisch geformte bzw. gestanzte, ebene Blechteile. Zwischen jedem oberen und unteren Führungselement ist ein erstes Greifarmpaar 5 angeordnet, wobei der Abstand der Führungselemente der Höhe des ersten Greifarmpaars 5 entspricht. Dadurch wird ein Verfahren des ersten Greifarmpaars 5 entlang der Lagerbolzen 3, 4 einer Greifeinrichtung, insbesondere deren Drehachseinrichtung 31, zwischen den Führungselementen unterbunden, um einen ungewollten Bewegungsspielraum zu vermeiden. Somit wird die Stellung des ersten Greifarmpaars 5 abhängig von der Stellung der Stellplatte 2. Die Hubstrecke der Stellplatte 2 (und somit der der ersten Greifarmpaare 5) wird durch das Ende der maximal aus dem Stellantrieb 28 ausfahrbaren Hubachse 32 bis zur Unterseite des Gegenlagers 29 der Drehachseinrichtung 31 abzüglich des von der Stellplatte 2 beabstandeten oberen Führungselements bestimmt. Der Stellantrieb 28 ist mittels von vier Abstandsbolzen 24 mit der Trägerplatter 21 verbunden. Der Durchmesser der Stellplatte 2 ist kleiner als der Durchmesser der Trägerplatte 21, da die Verbindung zwischen Stellplatte 2 und den ersten Greifarmpaaren 5 dank der Verbindungselemente 30 hergestellt wird. Damit die Stellplatte 2 auf Grund dessen geringen Dicke bzw. Höhe beim Absenken oder Anheben entlang der Abstandsbolzen 24, die durch Bohrungen der Stellplatte 2 verlaufen, nicht verkippt, sind bei den genannten Bohrungen Führungshülsen ausgebildet, deren Innendurchmesser dem Durchmesser der Abstandsbolzen 24 entsprechen und ein Verfahren der Stellplatte 2 ohne Verkippen ermöglichen. Die zweiten Greifarmpaare 25 werden mittels an den Lagerbolzen 3, 4 angebrachten Sicherungsringen (nicht erkennbar) an einem unbeabsichtigten Verfahren bzw. Verschieben gehindert.

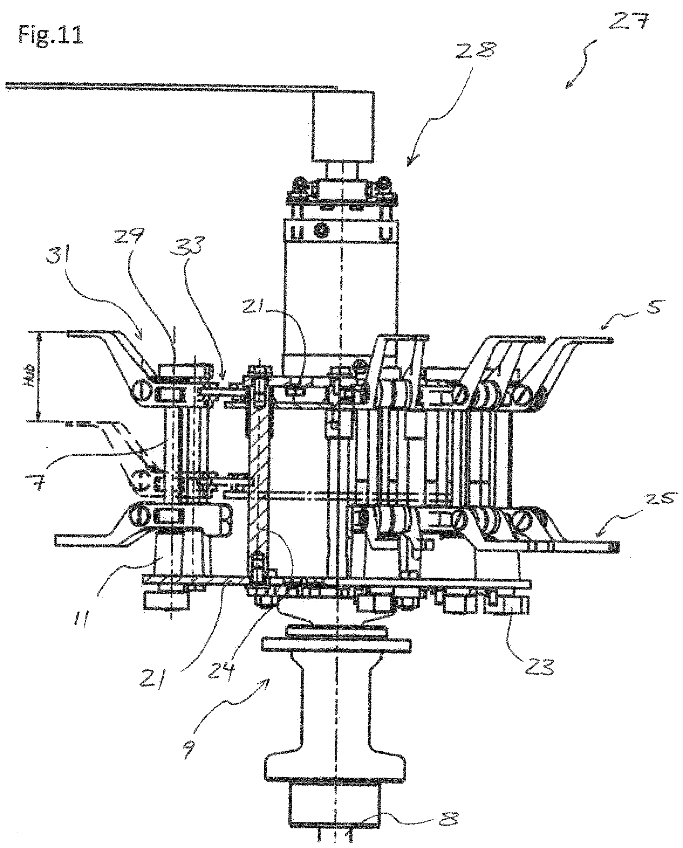

Figur 11 zeigt eine kombinierte Querschnitts- und Seitenansicht (ähnlich wie in Figur 10) auf eine weitere Transporteinrichtung 27, deren Bauteile und Funktionen identisch zu denen der Transporteinrichtung aus Figur 8 bzw. 10. Im Vergleich zur Transporteinrichtung aus Figur 10, ist allerdings die Trägerplatte 21 in Figur 11 dünner (und vorzugsweise aus Metall), weshalb die Greifeinrichtungen mittels Aufnahmesockeln 11 auf der Trägerplatte 21 befestigt werden müssen. In einem Aufnahmesockel 11 sind die beiden Lagerbolzen für das erste und zweite Greifarmpaar 5, 25 befestigt und die Schaltachse 7 drehbar gelagert. Des Weiteren weist diese Transporteinrichtung 27 ein anderes Verbindungselement 33 als Alternative zum Verbindungselement 30 aus Figur 10 auf. Das Verbindungselement 33 aus Figur 11 weist lediglich ein Führungselement (anstelle von zwei Führungselementen) auf, das auf der Oberseite am Rand der Stellplatte 2 befestigt ist und einen Abstand zwischen Stellplatte 2 und erstem Greifarmpaar 5 überbrückt. Das Führungselement ist ein geformtes bzw. gestanztes, ebenes Blechteil, dessen eine Ende auf der Stellplatte 2 befestigt ist und dessen andere Ende jeweils in einer am zum Greifabschnitt gegenüberliegenden Ende eines Greifarms ausgebildeten Vertiefung des ersten Greifarmpaars 5 angeordnet bzw. eingesetzt wird. Diese Vertiefungen sind genauso breit, wie das Führungselement, insbesondere dessen anderes Ende, dick bzw. hoch ist; d.h. die Vertiefungen sind passgenau und dürfen dem eingesetzten Führungselement kein Spiel erlauben, um somit ein ungewolltes Verfahren des ersten Greifarmpaars 5 entlang der Lagerbolzen zu unterbinden. Angesichts der Tatsache, dass die Greifarme vorzugsweise aus Kunststoff gefertigt sind, müssen die Vertiefungen des Weiteren derart ausgebildet sein, das Gewicht einer gefüllten Flasche zu tragen, ohne abzubrechen oder zu verbiegen (abgesehen von Materialermüdung bei Langzeitnutzung der Greifarme).

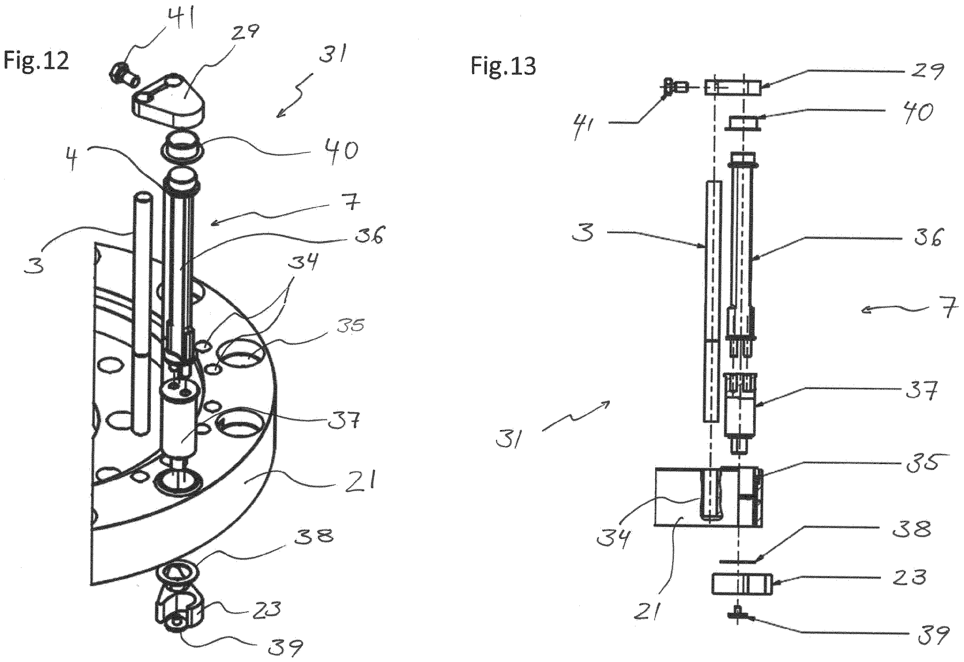

Figur 12 zeigt eine perspektivische Explosionsansicht auf eine steckbare Drehachseinrichtung 31 aus einer Transporteinrichtung 27 von Figur 8, 9 und 10, die in einer Trägerplatte 21 befestigt ist. Die Drehachseinrichtung 31 weist einen ersten und einen zweiten Lagerbolzen 3, 4, eine Schaltachse 7 mit einem oberen und einem unteren Abschnitt 36, 37, einem Gegenlager 29 und eine Schaltklaue 23 auf. Die Lagerbolzen 3, 4 sind jeweils in einem Sackloch 34 der Trägerplatte 21 eingesetzt. Die Schaltachse 7, insbesondere dessen unterer Abschnitt 37, ist in einer Senkbohrung 35 der Trägerplatte 21 eingesetzt und drehbar gelagert und am zur Unterseite der Trägerplatte 21 gerichteten bzw. herauserstreckendem Ende mit der Schaltklaue 23 mittels eines Befestigungselements 39, z.B. einer Schraube, fest verbunden. Damit die Schaltklaue 23 nicht mit der Unterseite der Trägerplatte 21 in Kontakt kommt und ein Reibungswiderstand oder Hindernis beim Drehen der Schaltklaue 23 entsteht, ist zwischen der Schaltklaue 23 und dem unteren Abschnitt 37 bzw. der Trägerplatte 21 ein Abstandsring 38 angeordnet. Der untere Abschnitt 37 weist einen an dessen oberen Ende ausgebildeten schrägen oder abgestuften Rand auf, der ein Durchrutschen des unteren Abschnitts 37 durch die Senkbohrung 35 verhindert. Der obere Abschnitt 36 ist nockenförmig ausgebildet, um die Greifarmpaare einer Greifeinrichtung zu öffnen oder zu schließen. Der obere Abschnitt 36 weist zwei an einer Endseite ausgebildete Stifte auf, die senkrecht zum unteren Abschnitt 37 gerichtet sind, während der untere Abschnitt 37 an der zum oberen Abschnitt 36 gerichteten Endseite zwei zu den Stiften gegengleich ausgebildete Vertiefungen aufweist. Dadurch können die beiden Abschnitte 36, 37 ineinander gesteckt und verdrehsicher miteinander verbunden werden, um eine Drehung der Schaltklaue 23 auf die komplette Schaltachse 7 zu übertragen. Der obere Abschnitt 36 wird mittels einer Schaltachslagerung 40, z.B. in Form einer Lagerhülse, in ein Sackloch (nicht dargestellt) des Gegenlagers 29 eingesetzt und somit drehbar gelagert. Die Lagerbolzen 3, 4 werden in Bohrungen des Gegenlagers 29 eingesetzt und mittels eines Befestigungselements 41 in den genannten Bohrungen des Gegenlagers 29 fixiert und befestigt. Damit sich die Drehachseinrichtung 31 nicht von der Trägerplatte 21 löst, sind die Lagerbolzen 3, 4 vorzugsweise mittels Presspassung in den Sacklöchern 34 befestigt und dienen somit dem Gegenlager 29 als Halterung bzw. Befestigung zur Trägerplatte 21. Dadurch kann das Gegenlager 29 nicht bewegt bzw. verschoben und die Schaltachse 7 aus der Lagerung bzw. dem Sackloch des Gegenlagers 29 ungewollt entfernt werden. Das Gegenlager 29 ist auf Grund der Durchmesser sowie der Anordnung von der Schaltachse 7 und der Lagerbolzen 3, 4 dreiecks- bzw. trapezförmig, um die kleinstmögliche Fläche zu bilden und Material zu sparen.

Figur 13 zeigt eine seitliche Explosionsansicht auf die steckbare Drehachseinrichtung von Figur 12. Hierbei sind das Sackloch 34 und die Senkbohrung 35 der Trägerplatte 21 sowie die parallele Anordnung der Lagerbolzen 3, 4 zu der Schaltachse 7 gut erkennbar. Die Stifte des oberen Abschnitts 36 sind achsensymmetrisch zur Schaltachse 7 ausgebildet, wodurch die Steckverbindung des unteren und des oberen Abschnitts 37, 36 eine Drehung der Schaltklaue 23 und dessen Drehmoment am effektivsten übertragen kann.

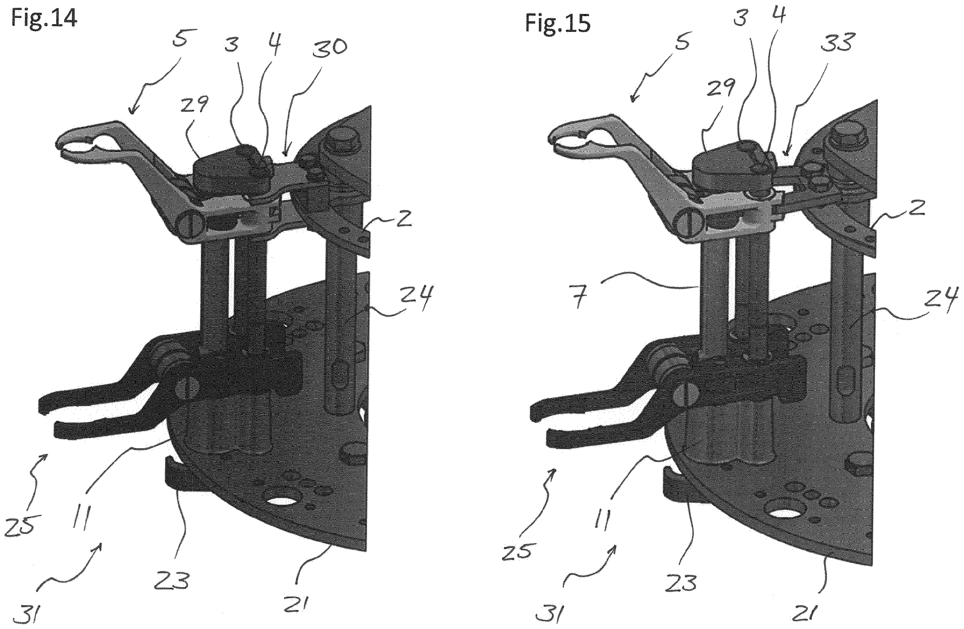

Figuren 14 und 15 zeigen jeweils eine perspektivische Ausschnittsansicht auf eine Transporteinrichtung mit höhenverstellbaren Greifarmpaaren 5 und 25, insbesondere auf eine aus Figur 11 identisch ausgebildete Drehachseinrichtung 31. Der Unterschied zwischen den Figuren 14 und 15 liegt in den Verbindungselementen 30 und 33, die bereits in den Figuren 10 und 11 dargestellt wurden. Die Stellplatte 2 weist einen Außenring (anstelle einer kreisförmigen Platte) auf, an der die Verbindungselemente 30, 33 befestigt sind. Zusätzlich erstrecken sich von dem Außenring der Stellplatte 2 parallel zur Trägerplatter 21 in Richtung der Antriebswelle vier Stege (nicht dargestellt), die jeweils entlang der Abstandsbolzen 24 gelagert und verfahrbar sind, zum Drehpunkt der Antriebswelle zusammenlaufen und dort verbunden oder einstückig ausgebildet sind. Im Drehpunkt ist die Stellplatte 2 mit einer Hubachse oder (mittels eine Spindelmutter) mit einer Spindel eines Stellantriebs verbunden und kann abgesenkt und angehoben werden. Das zweite Greifarmpaar 25 ist mittels eines Sicherungsrings an jeweils einem Lagerbolzen 3, 4 fixiert und wird dadurch an einer Höhenverstellung gehindert.

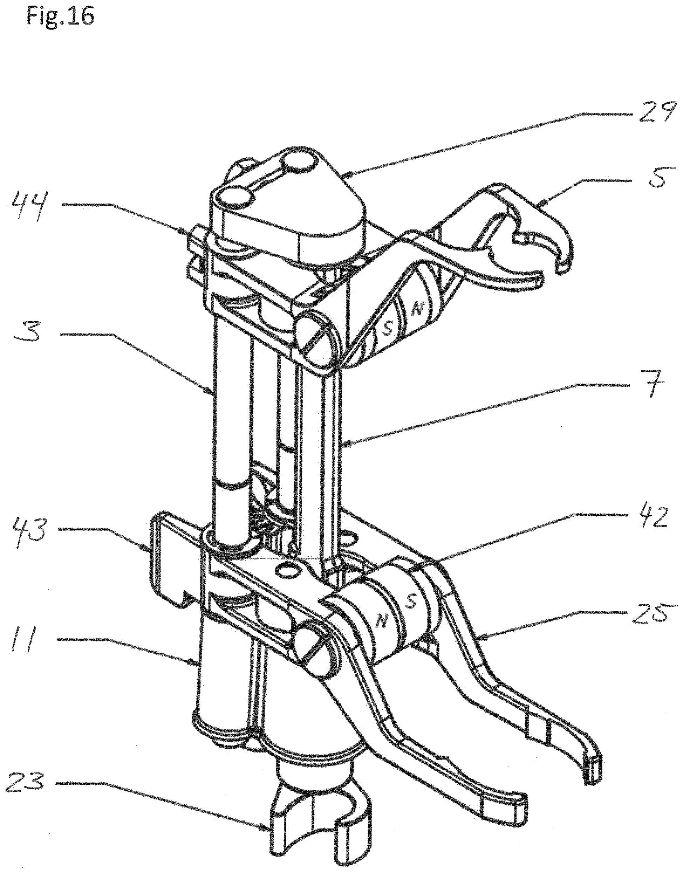

Figur 16 zeigt eine perspektivische Ansicht auf eine Drehachseinrichtung bzw. eine Greifeinrichtung mit einem ersten Greifarmpaar 5 und einem zweiten Greifarmpaar 25 der Transporteinrichtung aus Figur 11. Während das erste Greifarmpaar 5 lediglich Aufnahmen bzw. Schließmittel in Form von sich gegenseitig anziehenden bzw. unterschiedlich gepolten Magneten aufweist, sind bei dem zweiten Greifarmpaar 25 Aufnahmen 42, 43 bzw. Schließmittel in Form von unterschiedlich gepolten Magneten sowie Federelementen (nicht dargestellt) vorhanden. Dadurch wird die Greifkraft des zweiten Greifarmpaars 25 für Behälter verstärkt und das erste Greifarmpaar 5 beim Halten eines Behälters entlastet. Im Wesentlichen dient das erste Greifarmpaar 5 vorzugsweise der Ausrichtung und der Stabilisierung eines Behälters beim Transport, da ansonsten die Höhenverstellung und die damit beteiligten Bauteile, wie z.B. Stellplatte, Stellantrieb, etc., mit einem großen Teil des Gewichts des Behälters belastet werden. Anstelle einer Aufnahme 43 für Federelemente, weist das erste Greifarmpaar 5 an seinem Ende daher eine Aufnahme 44 für Verbindungselemente aus Figur 15 zur Verbindung der Stellplatte mit dem Greifarmpaar 5 und der damit möglichen Höhenverstellbarkeit bzw. Einstellbarkeit auf.

### Bezugszeichenliste

- 1: Greif- und Transporteinrichtung (1. Variante)
- 2: Erste Stellplatte
- 3: Erster Lagerbolzen
- 4: Zweiter Lagerbolzen
- 5: (Erstes) Greifarmpaar
- 6: Greifabschnitt
- 7: Schaltachse
- 8: Antriebswelle
- 9: Arretierung
- 10: Ansteuerungsvorrichtung
- 11: Aufnahmesockel
- 12: Nabe
- 13: Dichtungselement
- 14: Erste Kammer
- 15: Zweite Kammer
- 16: Hubzylinder
- 17: Aufsatz
- 18: Kugellager
- 19: Greif- und Transporteinrichtung (2. Variante)
- 20: Handrad
- 21: Trägerplatte
- 22: Fixierungsplatte
- 23: Schaltklaue
- 24: Abstandsbolzen
- 25: Zweites Greifarmpaar
- 26: Spindel bzw. Achse mit Helix-förmigen Gewinde
- 27: Greif- und Transporteinrichtung (3. Variante)
- 28: Stellantrieb
- 29: Gegenlager
- 30: Verbindungselement (1. Variante)
- 31: Steckbare Drehachseinrichtung
- 32: Hubachse
- 33: Verbindungselement (2. Variante)
- 34: Sackloch
- 35: Senkbohrung
- 36: Oberer Abschnitt der Schaltachse 7
- 37: Unterer Abschnitt der Schaltachse 7
- 38: Sicherungs-/Abstandsring
- 39: Befestigungselement
- 40: Schaltachslagerung
- 41: Befestigungselement
- 42: Aufnahme für Magnete
- 43: Aufnahme für Federelemente
- 44: Aufnahme für Verbindungselement

## Patentansprüche

1. Vorrichtung zum Höhenverstellen einer Greif- und Transporteinrichtung zum Greifen, Halten, Führen und Transportieren von insbesondere flaschenartigen Behältern, mit wenigstens einer ersten Stellplatte (2), an oder auf der auf wenigstens einem, vorzugsweise zwei Lagerbolzen (3, 4) horizontal schwenkbar sitzend mindestens ein erstes Greifarmpaar (5) mit zangenförmigen Greifabschnitten (6) zum Greifen, Halten und Führen eines Behälters befestigt ist, mit einer unterhalb der ersten Stellplatte (2) angeordneten Trägerplatte (21), an oder auf der wiederum auf wenigstens einem, vorzugsweise zwei Lagerbolzen (3, 4) horizontal schwenkbar sitzend mindestens ein zweites Greifarmpaar (25) mit zangenförmigen Greifabschnitten zum Greifen, Halten und Führen des Behälters befestigt ist, und mit einer Antriebswelle (8) zum horizontalen Drehen der ersten Stellplatte (2) und der Trägerplatte (21) zum Transport gegriffener Behälter, wobei
die erste Stellplatte (2) entlang der Antriebswelle (8) in senkrechter Richtung verfahrbar ist,
**dadurch gekennzeichnet, dass**
das mindestens erste Greifarmpaar (5) und das mindestens zweite Greifarmpaar (25) gemeinsam auf wenigstens einem, vorzugsweise zwei Lagerbolzen (3, 4) horizontal schwenkbar sitzend mittels einer gemeinsamen Schaltachse (7) zwischen einer Aufnahmestellung und einer Greifoder Transportstellung hin und her bewegbar sind, wobei die Länge des bzw. der Lagerbolzen (3, 4) und die Länge der Schaltachse (7) eine Höhenverstellung mindestens eines der Greifarmpaare (5, 25) zulässt.

2. Vorrichtung nach Anspruch 1, **dadurch gekennzeichnet, dass**
zum Verfahren der ersten Stellplatte (2) ein Stellantrieb mit einem entlang der Antriebswelle (8) verfahrbaren Hubzylinder (16) und einer an der Antriebswelle (8) befestigten Nabe (12) vorgesehen ist, wobei die Nabe (12) innerhalb des Hubzylinders (16) angeordnet ist und der Hubzylinder (16) eine erste Hubkammer (14) und eine zweite Hubkammer (15) oberhalb und unterhalb der Nabe (12) aufweist.

3. Vorrichtung nach Anspruch 1, **dadurch gekennzeichnet, dass**
zum Verfahren der ersten Stellplatte (2) ein Stellantrieb mit einer rotierbaren Spindel (26) und einer gegenüber der ersten Stellplatte (2) ortsfesten Spindelmutter vorgesehen ist.

4. Vorrichtung nach einem der Ansprüche 1 bis 3, **gekennzeichnet durch**
eine oberhalb der ersten Stellplatte (2) angeordnete, an der Antriebswelle (8) rotierbar gelagerte Ansteuerungsvorrichtung (10) zum Ansteuern der Schaltachse (7) des mindestens einen, ersten Greifarmpaars (5) und eine mit der Ansteuerungsvorrichtung (10) verbundene Arretierung (9), mittels derer eine Rotationsbewegung der Ansteuerungsvorrichtung (10) auf der Antriebswelle (8) unterbunden wird.

5. Vorrichtung nach einem der Ansprüche 1 bis 4, **gekennzeichnet durch**
eine oberhalb der ersten Stellplatte (2) angeordnete zweite Stellplatte, an oder auf der wiederum auf wenigstens einem, vorzugsweise zwei Lagerbolzen (3, 4) horizontal schwenkbar sitzend mindestens ein drittes Greifarmpaar mit zangenförmigen Greifabschnitten zum Greifen, Halten und Führen eines Behälters befestigt und wiederum mittels einer Schaltachse (7) zwischen einer Aufnahmestellung und einer Greif- oder Transportstellung hin und her bewegbar und die zweite Stellplatte entlang der Antriebswelle (8) in senkrechter Richtung verfahrbar ist.

6. Vorrichtung nach einem der Ansprüche 1 bis 5, **dadurch gekennzeichnet, dass**
jeder Lagerbolzen (3, 4) mit seinem unteren Ende lösbar in ein Sackloch (34) und die Schaltachse (7) mit ihrem unteren Ende lösbar in eine Senkbohrung (35) in der ersten Stellplatte (2) bzw. in der Trägerplatte (21) steckbar sind, wobei die Schaltachse (7) an ihrem unteren Ende einen Stift aufweist, der die Senkbohrung (35) durchdringt und unterhalb der Stellplatte (2) bzw. der Trägerplatte (21) lösbar mit einer Schaltklaue (23) verbindbar ist, und wobei jeder Lagerbolzen (3, 4) mit seinem oberen Ende und die Schaltachse (7) mit ihrem oberen Ende gemeinsam in einem lösbar aufsteckbaren Gegenlager (29) aufgenommen sind.

7. Vorrichtung nach einem der Ansprüche 1 bis 6, **dadurch gekennzeichnet, dass**
die Schaltachse (7) einen unteren Abschnitt (37) und einen oberen Abschnitt (36) aufweist, die miteinander steckbar verbunden sind.

8. Vorrichtung nach Anspruch 6 oder 7, **dadurch gekennzeichnet, dass**
das Gegenlager (29) im Wesentlichen dreieck- oder trapezförmig ausgebildet ist.

9. Vorrichtung nach einem der Ansprüche 1 bis 8, **dadurch gekennzeichnet, dass**
an oder auf der ersten Stellplatte (2) und/oder an oder auf der zweiten Stellplatte und/oder an oder auf der Trägerplatte (21) ihrem Umfang entsprechend beliebig viele erste Greifarmpaare (5) bzw. zweite Greifarmpaare (25) bzw. dritte Greifarmpaare befestigt sind.

10. Vorrichtung nach Anspruch 9, **dadurch gekennzeichnet, dass**
die Gegenlager (29) für den bzw. die Lagerbolzen (3, 4) und die Schaltachsen (7) mehrerer Greifeinheiten einstückig ausgebildet oder durch einen Ring miteinander verbunden sind.

## Claims

1. A device for regulating the height of a gripping and transport device for gripping, holding, guiding and transporting in particular bottle-like containers, having at least one first positioning plate (2), to or on which at least one first gripper arm pair (5) with pincer-like gripping sections (6) for gripping, holding and guiding a container is mounted on at least one, preferably two, bearing pins (3, 4) seated so as to be horizontally pivotable, a supporting plate (21) arranged below the first positioning plate (2), to or on which at least one second gripping arm pair (25) with pincer-like gripping sections for gripping, holding and guiding the container is in turn mounted on least one, preferably two bearing pins (3, 4) seated so as to be horizontally pivotable, and a drive shaft (8) for horizontally rotating the first positioning plate (2) and the supporting plate (21) for transporting grasped containers, wherein the first positioning plate (2) is vertically displaceable along the drive shaft (8),
**characterized in that**
the at least one first gripper arm pair (5) and the at least one second gripper arm pair (25) can move back and forth together between a receiving position and a gripping or transport position on at least one, preferably two bearing pin(s) (3, 4) seated so as to be horizontally pivotable via a common switching axis (7), wherein the length of the bearing pin(s) (3, 4) and the length of the switching axis (7) allow an adjusting of the height of at least one of the gripper arm pairs (5, 25).

2. The device according to claim 1,
**characterized in that**
an actuator having a lifting cylinder (16) displaceable along the drive shaft (8) and a hub (12) affixed to the drive shaft (8) is provided to move the first positioning plate (2), wherein the hub (12) is arranged inside the lifting cylinder (16) and the lifting cylinder (16) comprises a first lift chamber (14) and a second lift chamber (15) above and below the hub (12).

3. The device according to claim 1,
**characterized in that**
an actuator having a rotatable spindle (26) and a spindle nut fixed with respect to the first positioning plate (2) is provided to move the first positioning plate (2).

4. The device according to one of claims 1 to 3,
**characterized by**
an actuating device (10) rotatably mounted on the drive shaft (8) arranged above the first positioning plate (2) for driving the switching axis (7) of the least one first gripper arm pair (5) and a locking mechanism (9) connected to the actuating device (10), by means of which a rotational movement of the actuating device (10) on the drive shaft (8) is prevented.

5. The device according to one of claims 1 to 4,
**characterized by**
a second positioning plate arranged above the first positioning plate (2), to or on which at least one third gripping arm pair with pincer-like gripping sections for gripping, holding and guiding the container is in turn mounted on least one, preferably two bearing pins (3, 4) seated so as to be horizontally pivotable and in turn able to move back and forth between a receiving position and a gripping or transport position via a switching axis (7) and the second positioning plate being vertically displaceable along the drive shaft (8).

6. The device according to one of claims 1 to 5,
**characterized in that**
the lower end of each bearing pin (3, 4) is removably insertable into a blind hole (34) and the lower end of the switching axis (7) is removably insertable into a counterbore (35) in the first positioning plate (2) or in the supporting plate (21) respectively, wherein the switching axis (7) has a pin at its lower end which passes through the counterbore (35) and is detachably connectable to a shifting dog (23) below the positioning plate (2) or the supporting plate (21) respectively, and wherein the upper end of each bearing pin (3, 4) and the upper end of the switching axis (7) are accommodated together in a detachably fit counter bearing (29).

7. The device according to one of claims 1 to 6,
**characterized in that**
the switching axis (7) comprises a lower section (37) and an upper section (36) able to be connected together.

8. The device according to claim 6 or 7,
**characterized in that**
the counter bearing (29) is of essentially triangular or trapezoidal configuration.

9. The device according to one of claims 1 to 8,
**characterized in that**
any number of first gripper arm pairs (5), respectively second gripper arm pairs (25), respectively third gripper arm pairs are attached to or on the first positioning plate (2) and/or to or on the second positioning plate and/or to or on the supporting plate (21) according to their size.

10. The device according to claim 9,
**characterized in that**
the counter bearings (29) for the bearing pin(s) (3, 4) and the switching axes (7) of multiple gripping units are integrally formed or connected together by a ring.

## Revendications

1. Dispositif de réglage en hauteur d'un moyen de préhension et de transport pour saisir, retenir, guider et transporter des récipients en particulier en forme de bouteilles, comportant
au moins une première plaque de pose (2) à laquelle ou sur laquelle est fixée au moins une première paire de bras de préhension (5) reposant avec mobilité en basculement horizontal sur au moins un, de préférence deux goujons de montage (3, 4) et comprenant des portions de préhension (6) en forme de pinces pour saisir, retenir et guider un récipient,
une plaque de support (21) disposée au-dessous de la première plaque de pose (2), à laquelle ou sur laquelle est fixée à son tour au moins une secondaire paire de bras de préhension (25) reposant avec mobilité en basculement horizontal sur au moins un, de préférence deux goujons de montage (3, 4) et comprenant des portions de préhension en forme de pinces pour saisir, retenir et guider un récipient, et
un arbre d'entraînement (8) pour faire tourner horizontalement la première plaque de pose (2) et la plaque de support (21) pour transporter des récipients saisis,
la première plaque de pose (2) étant déplaçable en direction verticale le long de l'arbre d'entraînement (8),
**caractérisé en ce que**
ladite au moins une première paire de bras de préhension (5) et ladite au moins une seconde paire de bras de préhension (25) sont mobiles en va-et-vient conjointement entre une position de réception et une position de préhension ou de transport au moyen d'un axe de commutation commun (7), en reposant avec mobilité en basculement horizontal sur au moins un, de préférence deux goujons de montage (3, 4), la longueur du ou des goujons de montage (3, 4) et la longueur de l'axe de commutation (7) permettant un réglage en hauteur de l'une au moins des paires de bras de préhension (5, 25).

2. Dispositif selon la revendication 1,
**caractérisé en ce que**
pour déplacer la première plaque de pose (2), il est prévu un entraînement de positionnement ayant un vérin de levage (16) mobile le long de l'arbre d'entraînement (8) et ayant un moyeu (12) fixé à l'arbre d'entraînement (8), le moyeu (12) étant disposé à l'intérieur du vérin de levage (16) et le vérin de levage (16) comprenant une première chambre de levage (14) et une seconde chambre de levage (15) au-dessus et au-dessous du moyeu (12).

3. Dispositif selon la revendication 1,
**caractérisé en ce que**
pour déplacer la première plaque de pose (2), il est prévu un entraînement de positionnement ayant une broche rotative (26) et un écrou de broche stationnaire par rapport à la première plaque de pose (2).

4. Dispositif selon l'une des revendications 1 à 3,
**caractérisé par**
un moyen de pilotage (10) disposé au-dessus de la première plaque de pose (2) et monté mobile en rotation sur l'arbre d'entraînement (10) pour piloter l'axe de commutation (7) de ladite au moins une première paire de bras de préhension (5), et par
un arrêt (9) relié au moyen de pilotage (10) et permettant d'interdire un mouvement de rotation du moyen de pilotage (10) sur l'arbre d'entraînement (8).

5. Dispositif selon l'une des revendications 1 à 4,
**caractérisé par**
une seconde plaque de pose disposée au-dessus de la première plaque de pose (2), à laquelle ou sur laquelle est fixée à son tour au moins une troisième paire de bras de préhension reposant avec mobilité en basculement horizontal sur au moins un, de préférence deux goujons de montage (3, 4) et comprenant des portions de préhension en forme de pinces pour saisir, retenir et guider un récipient, et qui est à son tour mobile en va-et-vient entre une position de réception et une position de préhension ou de transport au moyen d'un axe de commutation (7), la seconde plaque de pose étant mobile en direction verticale le long de l'arbre d'entraînement (8).

6. Dispositif selon l'une des revendications 1 à 5,
**caractérisé en ce que**
chaque goujon de montage (3, 4) est enfichable par son extrémité inférieure de façon amovible dans un trou borgne (34) et l'axe de commutation (7) est enfichable par son extrémité inférieure de façon amovible dans un perçage (35) dans la première plaque de pose (2) ou dans la plaque de support (21), l'axe de commutation (7) comprenant à son extrémité inférieure une tige qui traverse le perçage (35) et qui peut être reliée de façon amovible à une griffe de commutation (23) au-dessous de la plaque de pose (2) ou de la plaque de support (21), et il est prévu un palier antagoniste (29) enfichable de façon amovible pour recevoir conjointement chaque goujon de montage (3, 4) par son extrémité supérieure et l'axe de commutation (7) par son extrémité supérieure.

7. Dispositif selon l'une des revendications 1 à 6,
**caractérisé en ce que**
l'axe de commutation (7) comprend une portion inférieure (37) et une portion supérieure (36) reliées entre elles par enfichage.

8. Dispositif selon la revendication 6 ou 7,
**caractérisé en ce que**
le palier antagoniste (29) est réalisé sensiblement en forme de triangle ou de trapèze.

9. Dispositif selon l'une des revendications 1 à 8,
**caractérisé en ce que**
un nombre quelconque de premières paires de bras de préhension (5) ou de secondes paires de bras de préhension (25) ou de troisièmes paires de bras de préhension sont fixées à ou sur la première plaque de pose (2) et/ou à ou sur la seconde plaque de pose et/ou à ou sur la plaque de support (21), en correspondance de son/leur pourtour.

10. Dispositif selon la revendication 9,
**caractérisé en ce que**
les paliers antagonistes (29) pour le ou les goujons de montage (3, 4) et les axes de commutation (7) de plusieurs unités de préhension sont réalisés d'un seul tenant ou sont reliés entre eux par un anneau.
